# EUROPEAN PATENT APPLICATION

(11) **EP 2 194 321 A2**
(43) Date of publication of application: **09.06.2010**
(21) Application number: 09275118.9
(22) Date of filing: 01.12.2009
(51) Int. Cl.: F23D 14/02, F23D 14/48

(54) **A hydrogen-oxygen combustion burner**

(30) Priority: 05.12.2008 KR 20080123047
(71) Applicant: Hwang, Boo-Sung, Kyung-ki do (KR)
(72) Inventor: Hwang, Boo-Sung, Kyung-ki do (KR)
(74) Representative: Hocking, Adrian Niall

(57) **Abstract**

This invention is about a hydrogen-oxygen combustion burner which contains a gas line (L) that provides hydrogen-oxygen mixed gas, the sealed body (10) to block any foreign oxygen from entering, a combusting nozzle (20 )connected to the upper part of the body (10) and with multiple crater holes (23) toward the upper body (10), the distributing center (30) inside the body (10) distributing hydrogen-oxygen mixed gas provided by the gas line (L) to the crater holes, and the circulation forming center (40) (40') circulating the hydrogen-oxygen mixed gas by the pressure of the mixed gas flowing in from the nozzle distributing hole (24) inside the nozzle distributing center (24).

## Description

### Technical Field

The invention is about hydrogen-oxygen mixed gas combusting burner which enables the application of hydrogen-oxygen mixed gas to the real life electric machines.

### Background

Hydrogen-oxygen mixed-gas generating system is made to produce hydrogen and oxygen from electrolyzed water. Water containing small amount of electrolytes is provided to the storage with positive (+) and negative (-) electrodes and electrolyzed by direct current producing pollution-free energy source, hydrogen-oxygen mixed gas. Hydrogen and oxygen produced is at the ratio of 2 : 1 and hydrogen is formed as bubbles on the surface of negative (-) electrode and oxygen in bubbles on the positive (+) electrode. Hydrogen and oxygen produced can be mixed and combusted. Also hydrogen- oxygen gas mixture does not produce any pollutant when ignited, making it an important eco-friendly energy source.

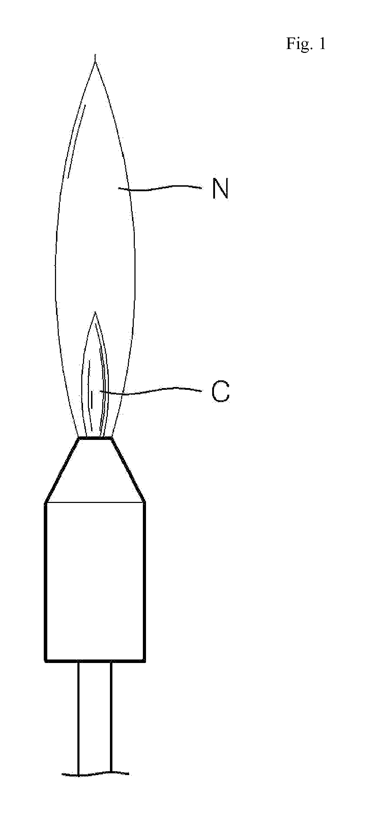

When hydrogen-oxygen mixed gas is combusted, the fire forms a long but tiny tube because the size of the fire decreases due to the oxygen inside the gas and water produced as a result of the combustion of the mixed gas. Also the combusting fire ( C ) of the hydrogen-oxygen gas has a nucleus (N) at the center of the fire as drawn in the diagram 1, which temperature is about 3000 to 6000 °C high.

Most of the gas machines, such as boiler or gas range, used at home have melting point of 2000°C but because the nucleus of the hydrogen-oxygen mixed gas combustion fire is between 3000 - 6000 °C, anywhere the fire touches it melts down. Also, because the fire is shape of a stick, it cannot heat up a large area. As a result, the hydrogen-oxygen mixed gas combustion fire can be used only on limited areas, making it impractical.

### Problem to be solved

The invention is created to solve the problems mentioned above: to eliminate the nucleus, enlarge the size of the flame and to provide hydrogen-oxygen mixed gas combusting burner that can apply the hydrogen-oxygen mixed gas in real life.

### Brief Description of the Drawings

Diagram 1 is a sketch to explain the nucleus formation during the combustion of the hydrogen-oxygen gas.
Diagram 2 is a whole sketch of the hydrogen-oxygen mixed gas combustion burner based on the invention
Diagram 3 is a sectional sketch along the line III-III' on diagram 2
Diagram 4 is a sketch to describe the example of circulation forming center installed by combusting nozzle on diagram 2.
Diagram 5 is a dissembled sketch of the circulation forming center.
Diagram 6 is a sketch to describe another example of the circulation forming center by the combusting nozzle on diagram 2
Diagram 7 is a sketch on the hydrogen-oxygen mixed gas combusting burner example 2
Diagram 8 is a sectional sketch along the line VIII-VIII' on diagram 7
Diagram 9 is a sketch of the third example on hydrogen-oxygen mixed gas combusting burner based on the invention.
Diagram 10 is a sectional sketch on line X-X' on diagram 9
Diagram 11 is a sketch on an example of the circulation forming center on diagram 10
Diagram 12 is a sketch on the fourth example of the hydrogen-oxygen mixed gas combusting burner based on the invention.
Diagram 13 is a sectional sketch along the line XIII-XIII' on diagram 12 and description of the gas lines connection to the lower part of the body.

### Method of Solution

To solve the problems, the hydrogen-oxygen mixed gas combusting burner using the invention in example 1, has gas line (L) that provides hydrogen-oxygen mixed gas, the sealed body (10) to block any foreign oxygen from entering, combusting nozzle (20) connected to the upper part of the body (10) with multiple crater holes (23) toward the upper body (10), the distributing center(30) inside the body (10) distributing hydrogen-oxygen mixed gas provided by the gas line (L) to the crater holes, circulation forming center (40) (40') circulating the hydrogen-oxygen mixed gas due to the pressure of the mixed gas flowing in from the nozzle distributing hole (24) inside the nozzle distributing center (24), and multiple combusting nozzles (20) around the body (10) in circle sine the body (10) is cylinder.

In another example, the hydrogen-oxygen mixed gas combusting burner has the gas line (L) that provides hydrogen-oxygen mixed gas, the sealed body (10) to block any foreign oxygen from entering, combusting nozzle (20) with crater holes (23) and nozzle distributing hole (24) distributing hydrogen-oxygen mixed gas to the crater holes, the distributing center(30) inside the body (10) distributing hydrogen-oxygen mixed gas provided by the gas line (L) to the nozzle distributing hole, and circulation forming center (40) (40') circulating the hydrogen-oxygen mixed gas by the pressure of the mixed gas flowing in from the nozzle distributing hole (24). the body (10) is in a cylinder and the combusting nozzles (20) are placed on the body (20) making a circle.

The circulation forming center (40) is made up of the plate (41) with holes (41a) in certain distance, a number of wing sections (42) in an angle connecting the holes (41a) on the plate (41), and the journal (44) at the center of the wing section(42) piercing through the interior of the plate (41). The journal (44) supported by the supporter (26) formed at the lower nozzle distributing hole (24) to have an ability to spin.

Another example of this invention includes the gas line (L) that provides hydrogen-oxygen mixed gas, the cylindrical body (210) preventing any foreign oxygen from entering, slopes (220) on the edges on the upper body (210), crater holes (223) making a circle along the slopes (220), distributing center (230) in the body (210) which distributes the hydrogen-oxygen mixed gas entering from the gas line (L) to the crater holes (223), and the circulation forming center (240) circulating the hydrogen-oxygen mixed gas by circulating the gas by the pressure it brings when it enters through the gas line (L) in the distributing center (230). The circulation forming center (230) contains the revolving plate (241) in the distributing center (230) in a disk form, and the gyration induction part (242) placed around the revolving plate (241) which rotates the revolving plate (241) by the pressure the hydrogen-oxygen mixed gas brings from traveling through the gas line (L).

In another example on the invention to solve the problems is composed of the gas line (L) that provides hydrogen-oxygen mixed gas, the rectangular body (310) connected to the gas line preventing any foreign oxygen from entering, slopes (320) on the edges of the upper body (310), crater holes (323) lined along the slopes (320), distributing center (330) in the body (310) distributing the hydrogen-oxygen mixed gas from the gas line (L) to the crater holes (323), and the circulation forming center (340) circulating the hydrogen-oxygen mixed gas by the pressure it brings when the mixed gas enters through the gas line (L) in the distributing center (330). The circulation forming center (330) contains the revolving column (341) in the distributing center (330) and the gyration induction part (342) placed around the revolving plate (341) which rotates the revolving plate (341) by the pressure the hydrogen-oxygen mixed gas brings from traveling through the gas line (L).

### The Effect

According to the hydrogen-oxygen mixed gas combusting burner based on the invention, the flame of the hydrogen-oxygen mixed gas forming during the combustion does not contain a nucleus of high temperature nor small in size but large so the practicality dramatically increases.

### Specific explanation for realization of the invention

The following explanations are based on the sketches attached.

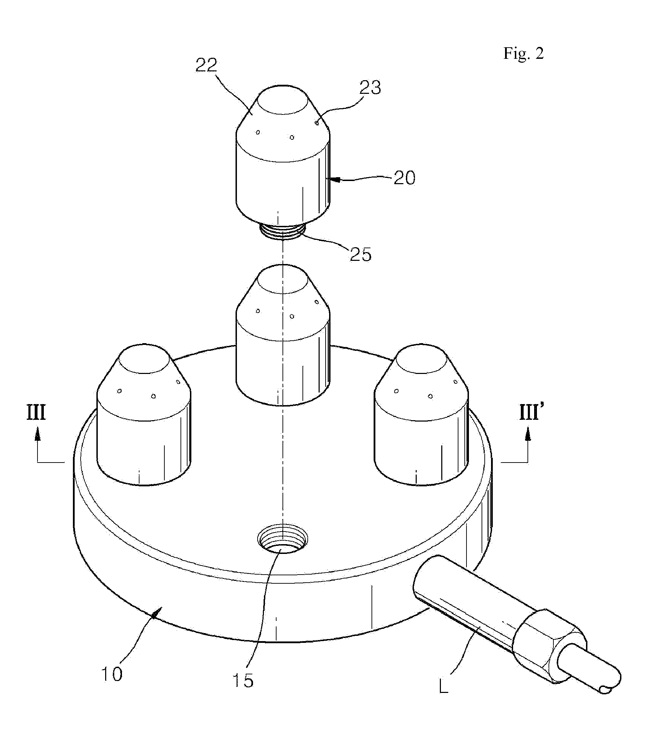

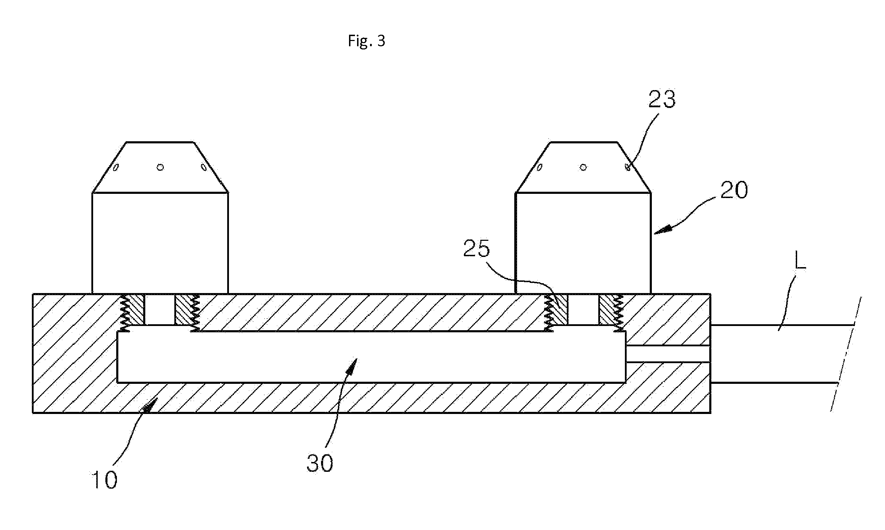

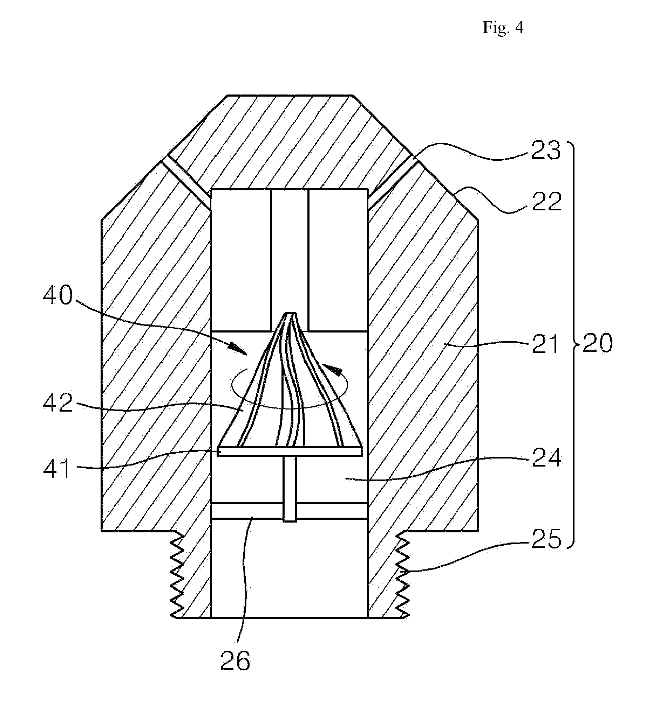

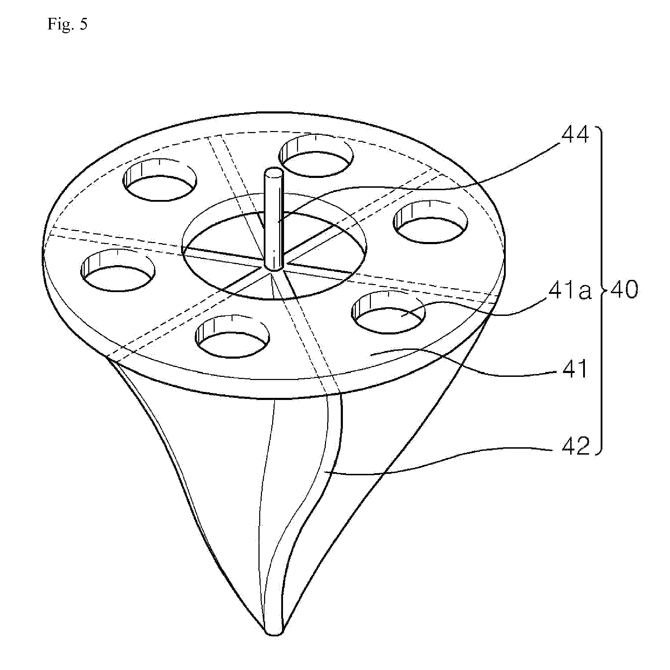

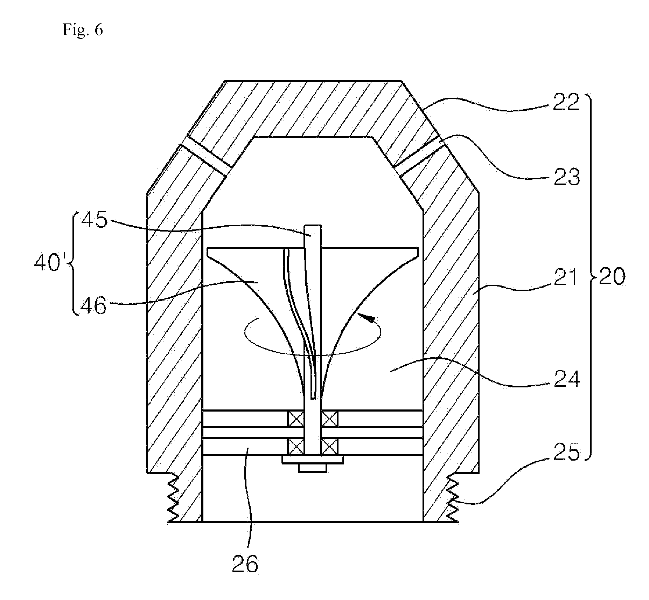

Diagram 2 is the whole sketch of the 1^{st} example on the hydrogen-oxygen mixed gas combusting burner based on the invention and diagram 3 is a sectional sketch along diagram 2's III-III'. Also, diagram 4 is a sketch explains an example of the circulation forming center on the combusting nozzle on diagram 2 and the diagram 5 is a sketch of the circulation forming center in diagram 5. Diagram 6 is another example of the circulation forming center on diagram 2.

As drawn, in the 1^{st} example of the hydrogen-oxygen combusting burner implicating the invention contains gas line (L) that provides hydrogen-oxygen mixed gas, the sealed body (10) to block any foreign oxygen from entering, combusting nozzle (20 )connected to the upper part of the body (10) and with multiple crater holes (23) toward the upper body (10), the distributing center (30) inside the body (10) distributing hydrogen-oxygen mixed gas provided by the gas line (L) to the crater holes, and the circulation forming center (40) (40') circulating the hydrogen-oxygen mixed gas by the pressure of the mixed gas flowing in from the nozzle distributing hole (24) inside the nozzle distributing center (24).

The body is a flat pipe and a number of combusting nozzles (20) are placed on the body making a circle. In the example, four combusting nozzles (20) are positioned across from each other. By increasing the number of the crater holes (23) the power of the combustion flame can be controlled.

The body is made of stainless or alloy steel which lasts even in the high temperature and four connecting holes are placed across from each other making a circle on the upper part of the body.

The distributing center (30) distributes the hydrogen-oxygen mixed gas entering from the gas line to the nozzle distributing hole (24) of the combusting nozzle (20) which would actually lead to distribution to the crater holes (23). The important thing is that because oxygen is included in the mixed gas, there should not be any more oxygen entering the distributing center (30) and to do this, the distributing center (30) should be built inside the body (10) completely isolated from outside.

Combusting nozzle (20) is made up of the round body of the nozzle (21), the slope on the body of the nozzle (21), a number of crater holes in widening angle on the slope (22), the nozzle distributing hole (24) perpendicular to the interior of the body of the nozzle (21) distributing hydrogen-oxygen mixed gas to the crater holes (23), and the connecting holes (25) on the bottom of the body of the nozzle (21).

A number of crater holes (23) are formed on the slope (22), preferably six, and each of the crater holes (23) has widening angle and for this, the hydrogen-oxygen mixed gas spraying from the crater hole (23) are jet into and combusted on large area.

The crater hole (23) should have a diameter between 0.2 mm and 2mm to minimize the possibility of forming a nucleus. Because the diameter of the crater hole (23) is tiny as in mm unit, the jet pressure of the hydrogen-oxygen mixed gas is low and part of the gas is mixed with the outside air during combustion. The air mixed with the gas dilutes the gas so the nucleus is unlikely to form during combustion.

The circulation forming center (40) circulates the hydrogen-oxygen mixed gas sprayed from the crater holes (23). The pressure that hydrogen-oxygen brings as it enters rotates the circulation forming center (40) and it then again circulates the hydrogen-oxygen mixed gas.

The circulation forming center (40) can be formed in various ways. For an example, as drawn in the sketch, it can be composed of the revolving plate (41) with several holes (41a) with certain distance from each other, the wings (42) with an angle connecting the holes (41a) at the bottom of the revolving plate (41), and the journal (44) that is formed at the center of the wing section (42) piercing through the revolving plate (41). The wing section (42) forms a triangle and the circulation forming center (40) connected to the wing section (42) on the plate (41) forms a big cone. The circulation forming center (40) is made with the supporter (25) at the bottom of the nozzle distributing hole (24) and the journal (44) is built on to make the circulation forming center (40) able to rotate.

The circulation forming center(40') can be composed of the shaft(45) and several wing sections(46) formed at the shaft at a slanting angle, and the whole wing section forms an inverse triangle. This circulation forming center(40') is made with the supporter (25) at the bottom of the nozzle distributing hole(24) and the shaft(44) is built on to make the circulation forming center(40) able to rotate.

According to the circulation forming center (40)(40'), the hydrogen-oxygen mixed gas provided by the nozzle distributing hole (24) goes out rotating the wing section (42)(46) at thousands or ten thousands of rpm, creating a circulation in the hydrogen-oxygen mixed gas and tens of millions vibration at the same time. The hydrogen-oxygen mixed gas at the circulation and vibration does not create any nucleus at the combustion because the gas sprayed from the crater hole (23) is diluted with the outside air effectively.

According to the structure described above, the hydrogen-oxygen mixed gas provided by the gas line (L) is distributed to the nozzle distributing hole (24) of the combusting nozzle (20) after distributed to the distributing center (30) in the body (10) and the hydrogen-oxygen mixed gas is circulated and vibrated by the circulation forming center (40) (40') and sprayed through the crater holes (23). The sprayed gas produces combustion heat forming a combustion flame. The hydrogen-oxygen mixed gas sprayed from the crater hole (23) is diluted with outside air effectively because it is in circulation and vibration so when combusted, the mixed gas does not form any nucleus in high temperature.

The following is the explanation on the 2^{nd} example of the hydrogen-oxygen mixed gas combusting burner.

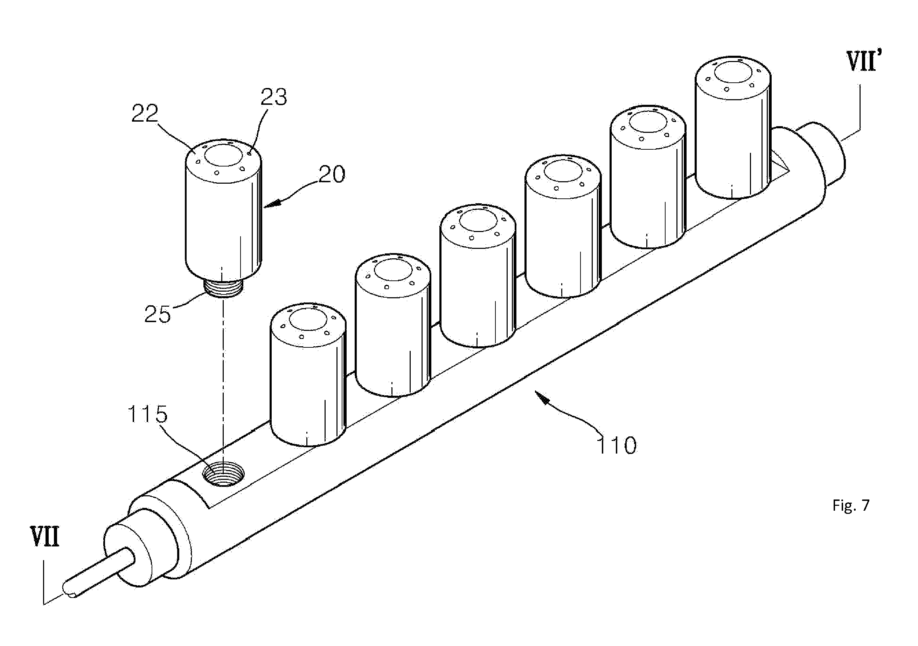

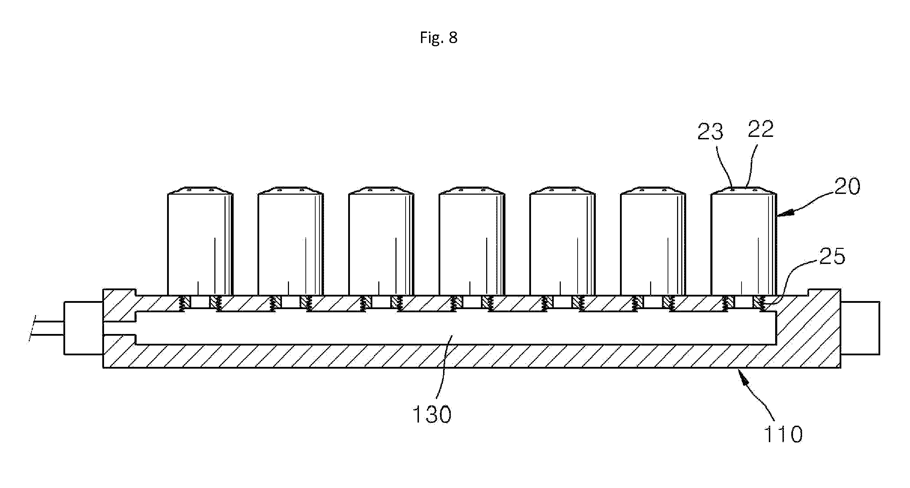

Diagram 7 is the sketch of the hydrogen-oxygen mixed gas combusting burner of example 2 and diagram 8 is a sectional sketch along line VIII-VII' of diagram 7.

As drawn, the example 2 of the hydrogen-oxygen mixed gas combusting burner based on the invention is composed of gas line (L) that provides hydrogen-oxygen mixed gas, the sealed body (110) to block any foreign oxygen from entering, combusting nozzle (20) connected to the upper part of the body (110) and have multiple crater holes (23) toward the upper body (110), the distributing center (130) inside the body (110) distributing hydrogen-oxygen mixed gas provided by the gas line (L) to the crater holes, and circulation forming center (40) (40') circulating the hydrogen-oxygen mixed gas.

The body (110) is a long pipe and the combusting nozzles (20) are placed in a line on the body (110). In the example, seven combusting nozzles (20) are used.

The body (110) is made of stainless or alloy steel which can last even in high temperature and the seven connecting holes (115) are placed opposite from each other making a circle on the body.

The distributing center (130) distributes the hydrogen-oxygen mixed gas to the nozzle distributing hole (24) of the combusting nozzle (20) which would lead to distribution of the mixed gas to the crater holes (23). The important thing is that due to the fact that the hydrogen-oxygen mixed gas already contains oxygen, no outside oxygen should enter the distributing center (130) so the distributing center (130) is in the body (110).

The combusting nozzle (20) in the example is described a bit differently from the combusting nozzle (20) in the 1^{st} example but because the technological composition used is same, they use same signs; more detailed explanation is omitted for it is already described thoroughly before.

According to the structure above, hydrogen-oxygen mixed gas provided by the gas line (L) is supplied to the distributing center (130) in the body (110) then distributed to the nozzle distributing hole (24) of the combusting nozzle (20) and circulated and vibrated by the circulation forming center (40) (40') before it is sprayed from the crater holes (23) they are distributed to. Hydrogen-oxygen mixed gas sprayed from the crater hole (23) then forms a combustion flame producing heat. The hydrogen-oxygen mixed gas sprayed from the crater hole (23) is mixed with the air effectively due to the circulation and vibration it holds, so there is no formation of nucleus of high temperature during the combustion.

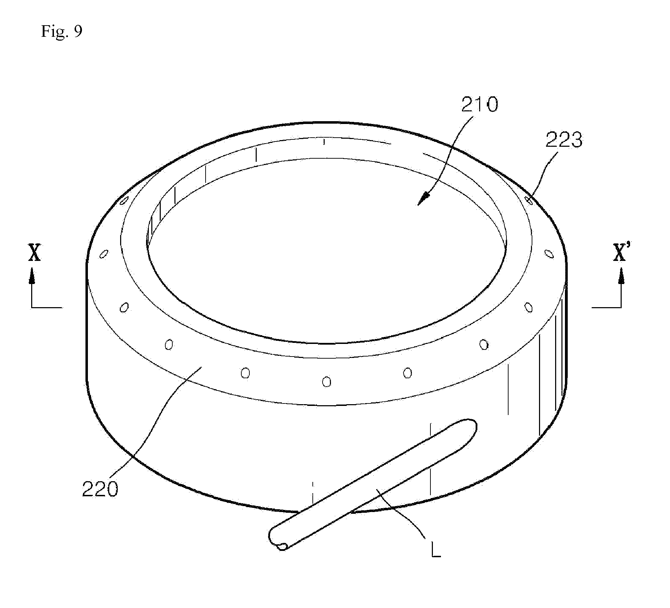

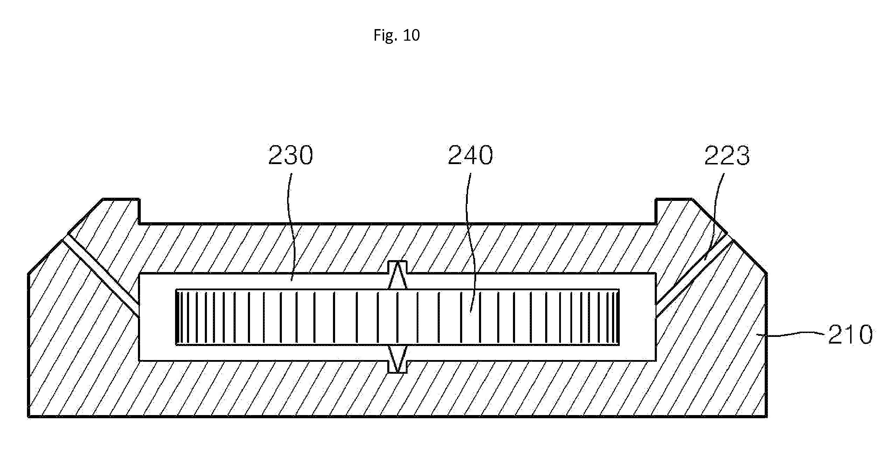

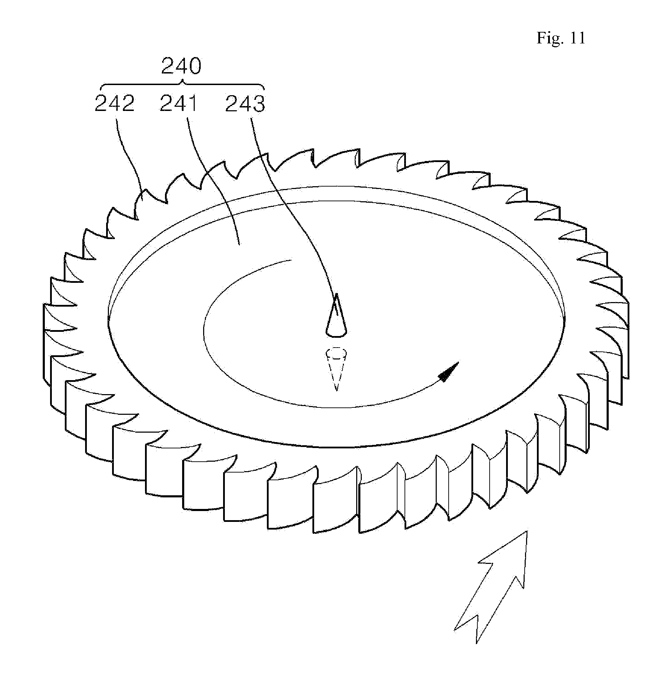

Diagram 9 is a sketch of hydrogen-oxygen mixed gas combusting burner based on the invention and diagram 10 is a sectional sketch along the diagram 9's X-X', and diagram 11 is a sketch of the circulation forming center of an example 1.

As drown below, the hydrogen-oxygen mixed gad combusting burner of example 3 consists of gas line (L) that provides hydrogen-oxygen mixed gas, the sealed body (210) to block any foreign oxygen from entering, the slope(220) formed at the top of the body(210) with the multiple crater holes(223), the distributing center(230) inside the body (210) distributing hydrogen-oxygen mixed gas provided by the gas line (L) to the crater holes(223), and circulation forming center (240) circulating the hydrogen-oxygen mixed gas.

The body (210) is a flat cylinder and the crater holes (223) make a circle along the slope (220).

The body (210) should be made of stainless of alloy steel which can stand high temperature and the slopes (220) are formed on the edges of the upper body (210).

The distributing center (230) distributes the hydrogen-oxygen gas supplied from the gas line (L) to the crater hole (223). The important thing is that due to the fact that the hydrogen-oxygen mixed gas already contains oxygen, no outside oxygen should enter the distributing center (230) so the distributing center (230) is built inisde the body (210).

The circulation forming center (240) prevents the nucleus formation during combustion of hydrogen-oxygen mixed gas supplied from the crater holes (223) by forming a circulation inside the distributing center (230). The circulation forming center (240) forms a circulation in a sealed distributing center (230) by revolving in a high speed by gas pressure coming from the gas line (L). The structure to make the circulation can be materialized in many forms. For an example, a revolving plate (241) in a disk form inside the distributing center (230), gyration inductions (242) formed at the end of the revolving plate (241) where hydrogen-oxygen mixed gas collide itself against the gyration inductions (242) making the revolving plate (241) to spin. The rotation induction (242) rotates the revolving plate (241) by the mixed gas pressure entering from the gas line (L). The gyration induction (242) can be in variety of forms such as saw teeth or holes around the revolving plate (241). In the example, the circulation forming center (240) is made up of revolving plate (241) in a disk form and the saw teeth around the revolving plate (241).

To make the circulation forming center (240) to spin by the hydrogen-oxygen mixed gas coming from the gas line (L), it is preferable that the hydrogen-oxygen mixed gas is sprayed to the edge of the circulation forming center (240). For this to happen, the gas line (L) is connected off the center of the body (210). However, if the gas line (L) is installed at the center of the body (210), then the angle of the gyration induction (242) would be tilted from the edge of the revolving plate (241).

According to the structure described above, the hydrogen-oxygen mixed gas supplied by the gas line (L) would enter the distributing center (230) in the body (210), forms a circulation through the circulation forming center (240), then distributed to the crater holes (223). As hydrogen-oxygen mixed gas's circulation enters the crater holes (223), it crashes against the interior of the hole and during the process and the circulation speeds up so when the mixed gas comes out of the crater hole (223) it is in serious circulation.

The gas sprayed then produces the combustion heat forming the combustion flame and is mixed with the air effectively due to the circulation and vibration it holds. So there is no nucleus of high temperature during the combustion.

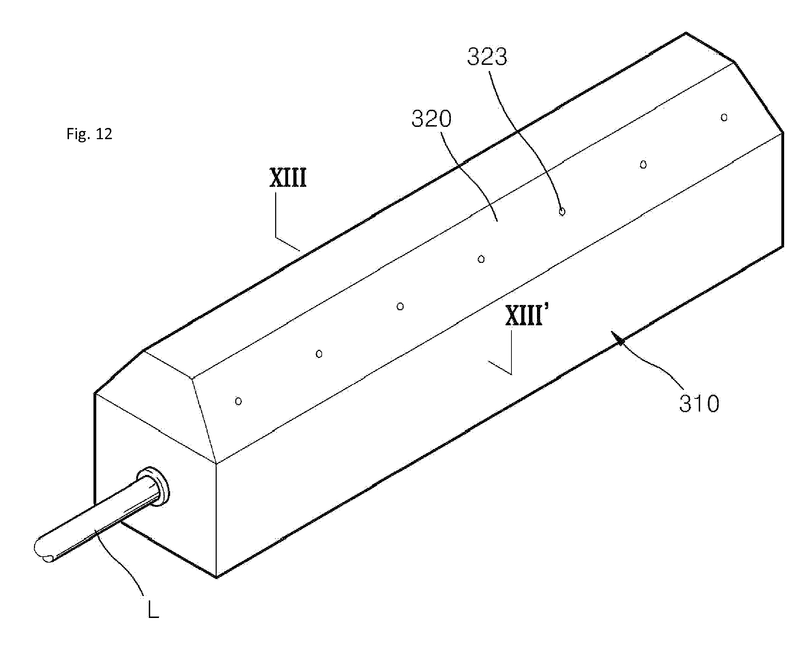

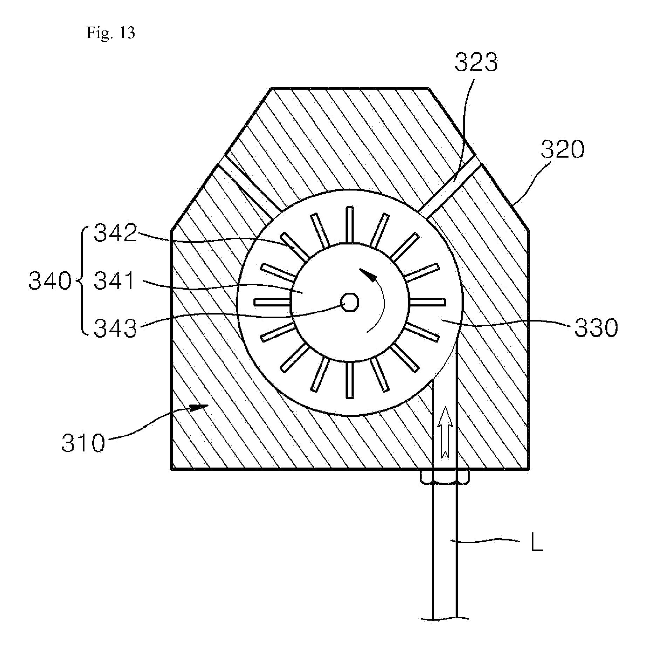

Diagram 12 is a whole sketch of the hydrogen-oxygen mixed gas combustion burner in example 4 and diagram 13 us a sectional sketch on diagram 12 along the line XIII-XIII' to explain that the gas line can be connected to lower body.

As drawn, in example 4 of the hydrogen-oxygen mixed gas burner based on the invention has a gas line (L) that provides hydrogen-oxygen mixed gas, the sealed body (310) to block any foreign oxygen from entering, the slope(320) formed at the top of the body(310) with multiple crater holes (323), the distributing center(330) inside the body (310) distributing hydrogen-oxygen mixed gas provided by the gas line (L), to the crater holes, and circulation forming center (40) (40') circulating the hydrogen-oxygen mixed gas.

The body (310) is a long rectangular shape and the slope (320) on the edges of the body (310) and the crater holes (232) are positioned simply in a line

The body (310) should be made of stainless of alloy steel which lasts even in high temperature and a pair of slopes (320) is place on the top edges on the body (310).

The distributing center (330) distributes the mixed gas coming from the gas line (L) to the crater holes (223). The important this is that due to the fact that the hydrogen-oxygen mixed gas already contains oxygen, no outside oxygen should enter the distributing center (330) and to do this, the distributing center (330) is in the body (310).

The circulation forming center (340) prevents the nucleus formation during combustion of hydrogen-oxygen mixed gas supplied from the crater holes (323) by forming a circulation inside the distributing center (330). The circulation forming center (340) forms a circulation in a sealed distributing center (330) by revolving in a high speed by gas pressure coming from the gas line (L). The structure to make the circulation can be materialized in many forms. For an example, a revolving column (341) in a disk form inside the distributing center (330), gyration inductions (342) formed at the end of the revolving column (341) where hydrogen-oxygen mixed gas run against the rotation inductions (342) making the revolving plate (341) to spin. The gyration induction (342) rotates the revolving column (341) by the mixed gas pressure entering from the gas line (L). The rotation induction can be in variety of forms such as saw teeth or wings or twisted wings around the revolving column (341). In the example, the circulation forming center (340) is made up of revolving column (341) in a disk form and the saw teeth around the revolving column (341).

To make the circulation forming center (340) to spin, by the hydrogen-oxygen mixed gas coming from the gas line (L), it is preferable that the hydrogen-oxygen mixed gas is sprayed to the edge of the circulation forming center (340). For this to happen, the gas line is connected off the center of the body (310). However, if the gas line (L) is installed at the center of the body (310), then the formation of the gyration induction (342) is tilted from the circulation formation center (340). Also as drawn, if the gas line (L) is formed at the center of the body's (310) width, then the gyration induction (342) would be twisted wings.

The hydrogen-oxygen mixed gas would enter the distributing center (330) in the body (310) through the gas line (L) and form a circulation at the circulation formation center (340) and sprayed after distributed to the crater holes (232). The hydrogen-oxygen mixed gas crash into the interior wall of the crater hole (323) while it enters the hole (323) and during the process the circulation is catalyzed and the mixed gas is in a big circulation when it exits through the crater hole (323).

The hydrogen-oxygen mixed gas sprayed from the status would create a combustion heat forming a combustion flame. The hydrogen-oxygen mixed gas is in circulation and vibrating it blends with air and diluted so effectively that it does not create any nucleus with high temperature.

The invention is explained based on the examples describe but they are only a few of the examples and anyone with an ample knowledge on the field would understand that many variations may apply.

### Signs regarding important parts of the figures

- 10,110 -: body
- 15,115 -: connecting holes
- 20 -: combusting nozzle
- 21 -: the body of nozzle
- 22 -: slope
- 23 -: crater hole
- 24 -: nozzle distributing hole
- 25 -: connecting screw
- 26 -: supporter
- 30,130 -: distributing center
- 40,40' -: circulation forming center
- 41 -: plate
- 41a -: hole
- 42 -: wing section
- 43 -: the wide section
- 44 -: journal
- 46 -: wing section
- 210,310-: body section
- 220,320-: slope
- 223,323-: crater hole
- 230,330-: distributing center
- 240,340-: circulation forming center

## Claims

**1.**
A hydrogen-oxygen combustion burner comprising a gas line (L) that provides hydrogen-oxygen mixed gas, the sealed body (10) to block any foreign oxygen from entering;
a combusting nozzle(20) connected to the upper part of the body (10) and with multiple crater holes (23) toward the upper body (10);
the distributing center (30) inside the body (10) distributing hydrogen-oxygen mixed gas provided by the gas line (L) to the crater holes;
the circulation forming center (40) (40') circulating the hydrogen-oxygen mixed gas by the pressure of the mixed gas flowing in from the nozzle distributing hole (24) inside the nozzle distributing center (24);
and its body is a flat pipe and a number of combusting nozzles (20) are placed on the body making a circle.

**2.**
A hydrogen-oxygen combustion burner comprising a gas line (L) that provides hydrogen-oxygen mixed gas, the sealed body (110) to block any foreign oxygen from entering;
a combusting nozzle (20) connected to the upper part of the body (110) and have multiple crater holes (23) toward the upper body (110);
the distributing center (130) inside the body (110) distributing hydrogen-oxygen mixed gas provided by the gas line (L) to the crater holes;
and circulation forming center (40) (40') circulating the hydrogen-oxygen mixed gas by the pressure of the mixed gas flowing in from the nozzle distributing hole (24) inside the nozzle distributing center (24);
and its body (110) is a long pipe and the combusting nozzles (20) are placed in a line on the body (110).

**3.**
A hydrogen-oxygen combustion burner according to claim 1 or claim 2, wherein the above-identified the circulation forming center (40) is composed of the revolving plate (41) with several holes (41a) with certain distance from each other,
the wings (42) with an angle connecting the holes (41a) at the bottom of the revolving plate (41), and the shaft (44) that is formed at the center of the wing section (42) piercing through the revolving plate (41);
and the above-identified shaft(44) is supported by the supporter(26) formed at the bottom of the nozzle distributing hole(24) to make it be able to revolve.

**4.**
A hydrogen-oxygen combustion burner according to claim 1 or claim 2, wherein the above-identified circulation forming center(40') is composed of the shaft (45) and several wing sections(46) formed at the shaft at a slanting angle. The above-identified shaft(45) is supported by the supporter (25) at the bottom of the nozzle distributing hole(24) and the shaft(44) is built on to make the circulation forming center(40) able to rotate.

**5.**
A hydrogen-oxygen combustion burner comprising a gas line (L) that provides hydrogen-oxygen mixed gas, the sealed body (210) to block any foreign oxygen from entering;
the slope(220) formed at the top corner of the body(210);
the multiple crater holes (223) formed as a circle according to the slope (220);
the distributing center (230) inside the body (210) distributing hydrogen-oxygen mixed gas provided by the gas line (L) to the crater holes (223);
and circulation forming center (240) circulating the hydrogen-oxygen mixed gas; and
the circulation forming center(240) contains a revolving plate (241) in a disk form inside the distributing center (230), gyration inductions (242) formed at the end of the revolving plate (241) where hydrogen-oxygen mixed gas collide itself against the gyration inductions (242) making the revolving plate (241) to spin.

**6.**
A hydrogen-oxygen combustion burner comprising a gas line (L) that provides hydrogen-oxygen mixed gas, the sealed body (310) to block any foreign oxygen from entering,
the slope(320) formed at the top of the body(310);
the multiple holes(323) along the slope(320);
the distributing center(330) inside the body (310) distributing hydrogen-oxygen mixed gas provided by the gas line (L), to the crater holes;
and circulation forming center (40) (40') circulating the hydrogen-oxygen mixed gas; and
the circulation forming center(340) contains a revolving column (341) in a disk form inside the distributing center (330), gyration inductions (342) formed at the end of the revolving column (341) where hydrogen-oxygen mixed gas run against the rotation inductions (342) making the revolving plate (341) to spin.
